# EUROPEAN PATENT APPLICATION

(11) **EP 3 885 049 A1**
(43) Date of publication of application: **29.09.2021**
(21) Application number: 19887056.0
(22) Date of filing: 01.02.2019
(51) Int. Cl.: B03C 3/30, B03C 3/36

(54) **AIR FILTERING AND DUST COLLECTION APPARATUS AND METHOD USING ELECTROSTATIC INDUCTION**

(30) Priority: 19.11.2018 KR 20180142219
(71) Applicant: Clair Inc., Seoul 06748 (KR)
(72) Inventor: LEE, Woo-Hun, Yongin-si Gyeonggi-do 16822 (KR)
(74) Representative: Goddar, Heinz J.
(86) International application number: PCT/KR2019/001409
(87) International publication number: WO 2020/105802

(57) **Abstract**

Disclosed is an electrostatic induction-type air filtration dust-collecting apparatus and method, whereby a film-type electrostatic filter having high efficiency and a low pressure loss is used as a primary filter so as to enhance air permeability to reduce the pressure loss and to enhance a dust-removing performance of the filter and the primary filter is utilized as an electrostatic inductor so that the performance of a secondary nonwoven fabric filter charged with static electricity can be enhanced and the enhanced performance can be maintained and thus the efficiency of collecting dust including ultrafine particles in air can be increased.

## Description

### TECHNICAL FIELD

The present invention relates to an air filtration dust-collecting technology, and more particularly, to an electrostatic induction-type air filtration dust-collecting apparatus and method, whereby a film-type electrostatic filter having high efficiency and a low pressure loss is used as a primary filter so as to enhance air permeability to reduce the pressure loss and to enhance a dust-removing performance of the filter and the primary filter is utilized as an electrostatic inductor so that the performance of a secondary nonwoven fabric filter charged with static electricity can be enhanced and the enhanced performance can be maintained and thus the efficiency of collecting dust including ultrafine particles in the air can be increased.

### BACKGROUND ART

In general, modern society is undergoing rapid economic growth and changes in the living environment, and among them, the deterioration of indoor/outdoor air quality is a representative example. In particular, humans who live in modern society spend more than 90% of 24 hours a day indoors, but because the concentration of pollutants is constantly increasing due to air circulation in the limited space, the importance of indoor air quality increases and becomes an important issue over time as people's living standards improve. Therefore, research and development on the purification of these pollutants and filter media are actively progressing based on advanced countries, and accordingly, demand and research for a high efficiency particulate air (HEPA) filter and an ultra low penetration air (ULPA) filter, which are key parts of air purifying equipment, is also expanding. However, in the case of HEPA and ULPA-class filters that are currently commercially available, various problems such as vibration, noise, and energy waste due to the pressure loss of the filter have been pointed out.

In addition, most of the high-performance filter media used in Korea are imported and used, but in recent years, medium/low performance and electrostatic filter media entered a mass production stage after localization was completed. However, over time, the performance and life span of the electrostatic filter have not met expectations due to the loss of charge over time, and in a recently-practical product, a method by which an ionizer is used to charge particles in the air and to increase the electrostatic force of the electrostatic filter with the charged particles so as to maintain its performance has been proposed. However, the existing method using an ionizer has a risk factor in which secondary pollutants such as ozone and carbon may be produced.

### DETAILED DESCRIPTION OF THE INVENTION

### TECHNICAL PROBLEM

The present invention provides an electrostatic induction-type air filtration dust-collecting apparatus and method, whereby a film-type electrostatic filter having high efficiency and a low pressure loss is used as a primary filter so as to enhance air permeability to reduce the pressure loss and to enhance a dust-removing performance of the filter and the primary filter is utilized as an electrostatic inductor so that the performance of a secondary nonwoven fabric filter charged with static electricity can be enhanced and the enhanced performance can be maintained and thus the efficiency of collecting dust including ultrafine particles in air can be increased.

### TECHNICAL SOLUTION

According to an aspect of the present invention, there is provided an electrostatic induction-type air filtration dust-collecting apparatus including: a primary film-type electrostatic filter configured in such a way that, after a filter element is formed by charging a polymer synthetic resin film and a plurality of protrusions are formed on the filter element so that positions of the plurality of protrusions are unevenly formed, the film is wound in a cylindrical shape to form a ventilation path in parallel with a flow direction of air and some of fine particles in the air passing through the ventilation path are collected by a traction force of static electricity of the charged filter element and an electrostatic force is applied to the remaining fine particles that have not been collected, by an electrostatic induction phenomenon that occurs while passing the ventilation path; and a second nonwoven fabric electrostatic filter configured to collect fine particles which have passed through the primary film-type electrostatic filter and to which the electrostatic force is applied, by a traction force of static electricity, wherein the fine particles to which the electrostatic force is applied, increase the electrostatic force of the secondary nonwoven fabric electrostatic filter so that collecting efficiency of the secondary nonwoven fabric electrostatic filter is increased and at the same time, performance of the secondary nonwoven fabric electrostatic filter is maintained for a long time.

According to another aspect of the present invention, there is provided an electrostatic induction-type air filtration dust-collecting method including: (a) preparing a primary film-type electrostatic filter configured in such a way that, after a filter element is formed by charging a polymer synthetic resin film and a plurality of protrusions are formed on the filter element so that positions of the plurality of protrusions are unevenly formed, the film is wound in a cylindrical shape to form a ventilation path in parallel with a flow direction of air; (b) collecting some of fine particles in the air passing through the ventilation path by a traction force of static electricity of the charged filter element and applying an electrostatic force to the remaining fine particles that have not been collected, by an electrostatic induction phenomenon that occurs while passing the ventilation path; (c) preparing a secondary nonwoven fabric electrostatic filter with the charged static electricity; and (d) collecting fine particles which have passed through the ventilation path of the primary film-type electrostatic filter and to which the electrostatic force is applied in (b), by a traction force of static electricity of the secondary nonwoven fabric electrostatic filter in (c), wherein the fine particles to which the electrostatic force is applied in (b), the electrostatic force of the secondary nonwoven fabric electrostatic filter is increased in (d) so that collecting efficiency of the secondary nonwoven fabric electrostatic filter is increased and at the same time, performance of the secondary nonwoven fabric electrostatic filter is maintained for a long time.

### DESCRIPTION OF THE DRAWINGS

FIG. 1 is a block diagram of an air filtration dust-collecting apparatus according to an embodiment of the present invention.
FIG. 2 is a perspective view of a state in which a part of a primary film-type electrostatic filter of FIG. 1 is unfolded.
FIG. 3 is a cross-sectional view of the electrostatic filter of FIG. 2.
FIG. 4 is a partial enlarged plan view of the electrostatic filter of FIG. 2.
FIG. 5 is a cross-sectional view taken along line A-A of FIG. 4.
FIG. 6 is a flowchart illustrating an air purifying method according to an embodiment of the present invention.

### BEST MODE

Hereinafter, embodiments of the present invention will be described in detail with reference to the accompanying drawings. In adding reference numerals to the components of the drawings, even though the same components are indicated on different drawings, these components should have the same reference numerals as much as possible. In addition, when describing the embodiments of the present invention, if it is determined that a detailed description of related known configurations or functions may obscure the gist of the present invention, the detailed description is omitted.

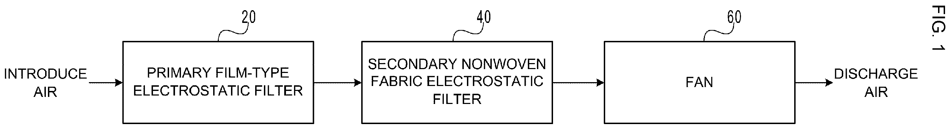

FIG. 1 is a block diagram of an air filtration dust-collecting apparatus according to an embodiment of the present invention. As shown in the same drawing, the air filtration dust-collecting apparatus according to an embodiment of the present invention may include a primary film-type electrostatic filter 20, a secondary nonwoven fabric electrostatic filter 40, and a fan 60.

The primary film-type electrostatic filter 20 that is used to primarily filter introduced air and then to discharge the air, may be configured to adsorb and collect, in particular, some of various fine particles contained in the introduced air by a traction force of static electricity charged on the surface of the filter 20 and to discharge unadsorbed/undustcollected fine particles after an electrostatic force is applied to the unadsorbed/uncollected fine particles by the electrostatic induction phenomenon between the filter 20 as a charger and the fine particles.

The secondary nonwoven fabric electrostatic filter 40 is used to secondarily filter the air that has passed through the primary film-type electrostatic filter 20 and then to discharge the air, may be configured to adsorb and collect fine particles to which an electrostatic force is applied, in the air that has passed through the primary film-type electrostatic filter 20 by a traction force of static electricity of the filter 40 and to filter the fine particles by physical characteristics of a nonwoven fabric.

According to the present embodiment, the primary film-type electrostatic filter 20 functions as an electrostatic inductor so that particles in the air introduced into the primary film-type electrostatic filter 20 have an electrostatic force by a static electricity induction phenomenon, and the particles with the electrostatic force are continuously collected into the secondary nonwoven electrostatic filter 40, the secondary nonwoven electrostatic filter 40 is continuously maintained in a charged state, and the efficiency of collecting particles (dust) in the air is improved, and thus, the performance and life span of the secondary nonwoven electrostatic filter 20 can be maximized.

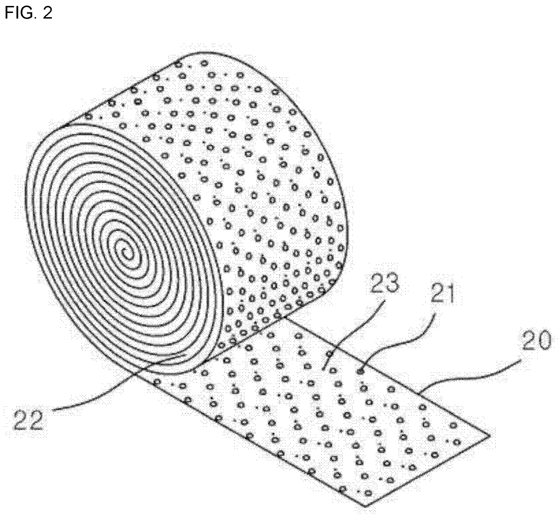

That is, the primary film-type electrostatic filter 20 according to the present embodiment includes a ventilation path (see 22 in FIGS. 2 to 3) that is in parallel with the flow direction of the air and has a certain length and width. Some of the fine particles in the air passing through the ventilation path 22 are collected by the traction force of static electricity, and an electrostatic force is applied to the remaining fine particles that have not been collected by the electrostatic induction phenomenon, and the fine particles with electrostatic force increase the electrostatic force of the secondary nonwoven fabric electrostatic filter 40, thereby increasing the collecting efficiency of the secondary nonwoven fabric electrostatic filter 40 and simultaneously maintaining the performance of the secondary nonwoven fabric electrostatic filter 40 for a long time.

The fan 60 is installed at the outlet side of the air filtration dust-collecting apparatus, i.e., behind the secondary nonwoven electrostatic filter 40, and when the fan 60 is driven, air is introduced to pass through the fan 60 in parallel with the ventilation path 22.

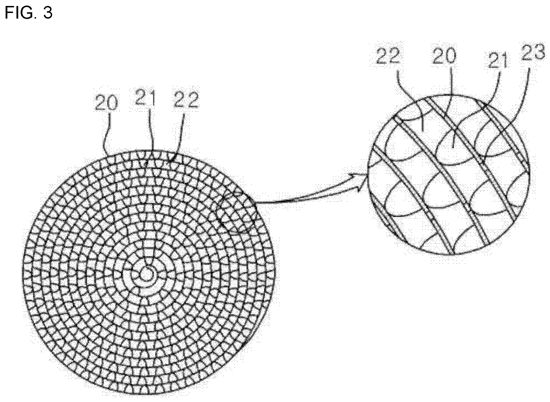

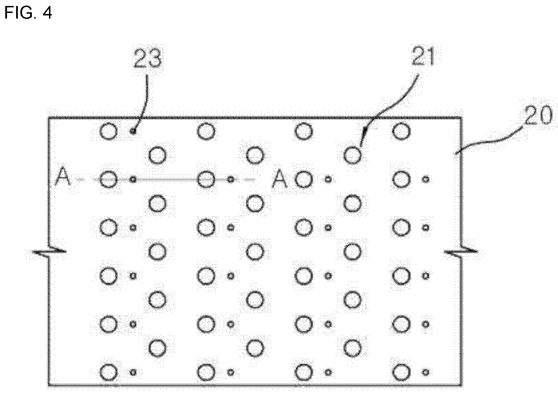

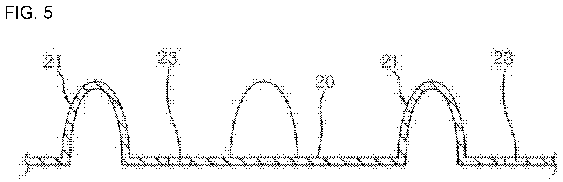

FIG. 2 is a perspective view of a state in which a part of a primary film-type electrostatic filter of FIG. 1 is unfolded, FIG. 3 is a cross-sectional view of the electrostatic filter of FIG. 2, FIG. 4 is a partial enlarged plan view of the electrostatic filter of FIG. 2, and FIG. 5 is a cross-sectional view taken along line A-A of FIG. 4.

In the primary film-type electrostatic filter 20 according to an embodiment of the present invention, a polymer synthetic resin film such as polypropylene or polyethylene are charged by a corona discharge device of 10 to 40 kV, etc., so that positive (+) polarity and negative (-) polarity charges are applied to form a filter element 20, for example, a plurality of protrusions 21 are spaced unevenly, so that their positions are irregular, and while the charges are performed, the filter element 20 having the protrusions 21 is wound in a cylindrical shape to form the ventilation path 22 that is in parallel with the flow direction of the air to be collected and has a width as the height of the protrusions 21, the filter element 20 penetrates between the protrusions 21 of the filter element 20 so that equalizing holes 23 for communicating both surfaces of the element 20 are formed.

The equalizing hole 23 has a cross section of an arbitrary shape, for example, circular, elliptical, triangular or more polygonal shape. The cross-sectional area of the equalizing hole 23 can be determined according to design conditions such as the passing pressure, the width or length of the ventilation path 22, and the wind pressure of the fan.

The thickness of the filter element 20 can be formed to be 0.1 to 1 mm to maintain rigidity, and the height of the protrusion 21 can be adjusted according to the condition of the air to be purified within the range of about 0.1 to 5 mm, the amount of ventilation (intake air) or the number of rotations of the fan. Also, the height of the protrusion 21 is adjusted by the width of the filter element 20 so that the pressure loss can be freely controlled. For example, when the width of the filter element 20 is reduced, the height of the protrusion 21 can be reduced, and when the width of the filter element 20 is increased, the height of the protrusion 21 can be increased.

Because the filter element 20 is usually built into a case, after the width of the filter element 20 is determined according to the design conditions such as the volume or shape of the case of the air filtration dust-collecting apparatus, the height of the protrusion 21 can be determined.

In addition, the protrusions 21 are formed with irregular distances therebetween so that, when the air to be purified passes through the ventilation path, the air collides with the protrusions 21 to form a bypass and the dust-collecting efficiency can be increased by friction.

The air to be purified flows into the ventilation path 22 in parallel with the flow direction of the air so that even fine dust is collected and at the same time, the smell of gas contained in fine dust is purified. For better purification of odors such as acidic or alkaline gas, when the filter element 20 is extruded, it is even better if you disperse porous deodorants such as activated carbon and zeolite and a disinfectant such as silver or titanium oxide that can be sterilized, and after making a wide film, it can be used by cutting it into a certain width.

The primary film-type electrostatic filter 20 as described above is usually built into the case, when the fan 60 is installed behind the primary film-type electrostatic filter 20 and adsorbs the air to be purified in parallel with the ventilation path 22, when the air to be purified passes through the ventilation path 22, charges (static electricity) applied to the filter element 20 and dust are charged so that dust can be collected and at the same time uncollected dust has an electrostatic force by an electrostatic induction phenomenon, and when the air is purified as described above, the air to be purified flows in parallel with the ventilation path 22 so that the pressure loss can be reduced, the passage length of the air to be purified is increased and thus the charging is good, and dust-collecting efficiency and static electricity induction can be increased.

In addition, unadsorbed particles in the air introduced by the primary film-type electrostatic filter 20 have an electrostatic force, and the particles are continuously collected into the secondary nonwoven electrostatic filter 40, so that the charged state of the particles collected on the surface of the secondary nonwoven electrostatic filter 40 and the electrostatic filter 40 can be continuously maintained. ed particles continuously.

In the primary film-type electrostatic filter 20, when the width of the filter element 20 is increased, the height of the protrusions 21 is increased, and when the width of the filter element 20 is reduced, the height of the protrusions 21 is reduced so that the degree of freedom of design of the air purifier can be increased.

In addition, in the present invention as described above, the fan 60 is installed at the inlet, outlet or the middle of the filters 20 and 40 to pass the air to be collected in parallel with the ventilation path 22 so that charges (static electricity) and foreign substances applied to the filter element 20 are charged and collected at the same time, electrostatic induction occurs.

As described above, when collecting dust or foreign substances, when a pressure difference between two sides of the filter element 20, that is, between the ventilation path 22 and the ventilation path 22 adjacent to each other for reasons such as difference in wind pressure (wind amount) between the center and the outer circumference of the fan 60 or high pressure of dust-collected air, the wind pressure of the high-pressure ventilation path 22 passes through the equalizing holes 23 and moves to the low-pressure ventilation path 22 so that the wind pressure of two sides of the filter element 20 is uniformly maintained to equally maintain distances between the ventilation paths 22, and when the distances between all ventilation paths 22 are uniform, the electric field strength in all ventilation paths is also uniform so that the pressure loss is reduced and good dust-collecting efficiency can be maintained.

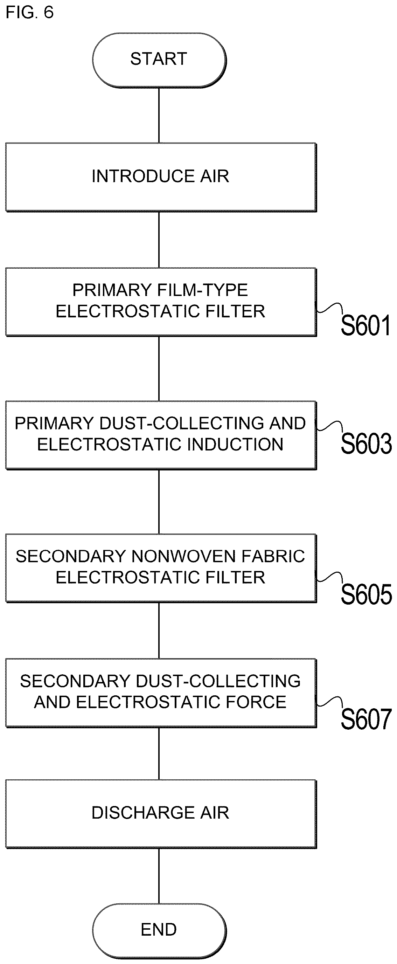

FIG. 6 is a flowchart of an air purifying method according to an embodiment of the present invention and is applied to the apparatus of FIGS. 1 to 5 and thus will be described in parallel with the operation of the apparatus.

First, as described with reference to FIGS. 2 to 5, after the filter element 20 is formed by charging the polymer synthetic resin film and a plurality of protrusions 21 are formed on the filter element 20 so that their positions are unevenly formed, the film is wound in a cylindrical shape to form the ventilation path 22 in parallel with the flow direction of the air, thereby including the primary film-type electrostatic filter 20 configured as shown in FIGS. 2 to 5 (S601).

Next, some of fine particles in the air passing through the ventilation path 22 of the primary film-type electrostatic filter 20 is collected by using the traction force of static electricity of the charged filter element 20, and an electrostatic force is applied to the remaining fine particles that have not been collected, by an electrostatic induction phenomenon that occurs while passing the ventilation path 22 (S603).

The secondary nonwoven electrostatic filter 40 with the charged static electricity is provided behind the primary film-type electrostatic filter 20 (S605), and the fine particles to which the electrostatic force passing through the ventilation path 22 of the primary film-type electrostatic filter 20 is applied in operation S603, are collected by the traction force of static electricity of the secondary nonwoven electrostatic filter 40 in operation S605, and in this case, the fine particles to which the electrostatic force is applied in operation S603, increases the electrostatic force of the secondary nonwoven electrostatic filter 40 so that the collecting efficiency of the secondary nonwoven electrostatic filter 40 is increased and at the same time, the performance of the secondary nonwoven electrostatic filter 40 can be maintained for a long time (S607).

### INDUSTRIAL APPLICABILITY

According to the present invention described above, collecting efficiency of dust including ultrafine particles in the air can be increased.

That is, a film-type electrostatic filter is utilized as an electrostatic inductor so that air permeability than existing filters (HEPA, ULPA) formed of fiber materials is improved, a pressure loss can be reduced and the dust removing performance of the filters can be maintained. Thus, a higher power consumption efficiency and low noise air purifying dust-collecting apparatus can be implemented. In particular, compared to an electricity charging method by an existing ionizer, there is the effect of blocking a risk associated with discharging of secondary pollutants such as ozone and carbon.

## Claims

1. An electrostatic induction-type air filtration dust-collecting apparatus comprising:
a primary film-type electrostatic filter configured in such a way that, after a filter element is formed by charging a polymer synthetic resin film and a plurality of protrusions are formed on the filter element so that positions of the plurality of protrusions are unevenly formed, the film is wound in a cylindrical shape to form a ventilation path in parallel with a flow direction of air and some of fine particles in the air passing through the ventilation path are collected by a traction force of static electricity of the charged filter element and an electrostatic force is applied to the remaining fine particles that have not been collected, by an electrostatic induction phenomenon that occurs while passing the ventilation path ; and
a second nonwoven fabric electrostatic filter configured to collect fine particles which have passed through the primary film-type electrostatic filter and to which the electrostatic force is applied, by a traction force of static electricity,
wherein the fine particles to which the electrostatic force is applied, increase the electrostatic force of the secondary nonwoven fabric electrostatic filter so that collecting efficiency of the secondary nonwoven fabric electrostatic filter is increased and at the same time, performance of the secondary nonwoven fabric electrostatic filter is maintained for a long time.

2. The electrostatic induction-type air filtration dust-collecting apparatus of claim 1, wherein equalizing holes are formed between the plurality of protrusions of the filter element so as to pass through the filter element.

3. The electrostatic induction-type air filtration dust-collecting apparatus of claim 1, further comprising a fan installed at an outlet side of the secondary nonwoven fabric electrostatic filter, wherein, when the fan is driven, the air passes through the fan in parallel with the ventilation path of the primary film-type electrostatic filter.

4. An electrostatic induction-type air filtration dust-collecting method comprising:
(a) preparing a primary film-type electrostatic filter configured in such a way that, after a filter element is formed by charging a polymer synthetic resin film and a plurality of protrusions are formed on the filter element so that positions of the plurality of protrusions are unevenly formed, the film is wound in a cylindrical shape to form a ventilation path in parallel with a flow direction of air;
(b) collecting some of fine particles in the air passing through the ventilation path by a traction force of static electricity of the charged filter element and applying an electrostatic force to the remaining fine particles that have not been collected, by an electrostatic induction phenomenon that occurs while passing the ventilation path;
(c) preparing a secondary nonwoven fabric electrostatic filter with the charged static electricity; and
(d) collecting fine particles which have passed through the ventilation path of the primary film-type electrostatic filter and to which the electrostatic force is applied in (b), by a traction force of static electricity of the secondary nonwoven fabric electrostatic filter in (c),
wherein the fine particles to which the electrostatic force is applied in (b), the electrostatic force of the secondary nonwoven fabric electrostatic filter is increased in (d) so that collecting efficiency of the secondary nonwoven fabric electrostatic filter is increased and at the same time, performance of the secondary nonwoven fabric electrostatic filter is maintained for a long time.

5. The electrostatic induction-type air filtration dust-collecting method of claim 4, wherein the primary film-type electrostatic filter in (a) has equalizing holes formed between the plurality of protrusions of the filter element so as to pass through the filter element.

6. The electrostatic induction-type air filtration dust-collecting method of claim 4, wherein a fan is installed at an outlet side of the secondary nonwoven fabric electrostatic filter, wherein, when the fan is driven, the air passes through the fan in parallel with the ventilation path of the primary film-type electrostatic filter.
